Europäisches Patentamt

European Patent Office

Office européen des brevets

(11) Veröffentlichungsnummer: **0 214 398**
**B1**

(12) EUROPÄISCHE PATENTSCHRIFT

(45) Veröffentlichungstag der Patentschrift:
22.11.90

(51) Int. Cl.⁵: **H04J 3/12, H04M 3/36**

(21) Anmeldenummer: 86109339.1

(22) Anmeldetag: 08.07.86

(54) Verfahren zur Überwachung und Steuerung des Verkehrs in digitalen Übertragungsnetzen.

(30) Priorität: 08.07.85 DE 3524381

(43) Veröffentlichungstag der Anmeldung:
18.03.87 Patentblatt 87/12

(45) Bekanntmachung des Hinweises auf die Patenterteilung:
22.11.90 Patentblatt 90/47

(84) Benannte Vertragsstaaten:
AT BE CH DE FR GB IT LI NL SE

(56) Entgegenhaltungen:
DE-C- 1 287 647
GB-A- 2 115 649
US-A- 3 525 814

NACHRICHTENTECHNISCHE ZEITSCHRIFT, Band 30,
Nr.2, Februar 1977, Selten 141-145; Berlin, DE; W.R.
LUNDERSTÄDT: "Planung und Überwachung des
digitalen Datenübertragungsnetzes"
(73) Patentinhaber: Siemens Aktiengesellschaft,
Wittelsbacherplatz 2, D-8000 München 2(DE)

(72) Erfinder: Pospischil, Reginhard, Dr.-Ing., Dipl.-Ing.,
Gabriel-von-Seidel-Strasse 15, D-8023 Gräfelfing(DE)
Erfinder: Breitfelder, Peter, Dipl.-Ing., Enzianring 40,
D-8028 Taufkirchen(DE)
Erfinder: Timmermann, Uwe, Dipl.-Ing. (FH),
Fürstenackerstrasse 41, D-8000 München 71(DE)

**Beschreibung**

Die Erfindung bezieht sich auf ein Verfahren zur Überwachung und Steuerung des Verkehrs in digitalen Übertragungsnetzen mit Durchschalteeinrichtungen einer Multiplex-Hierarchiestufe.

Digitale Übertragunsnetze und eine Multiplex-Hierarchie sind aus der Zeitschrift "telcom report", 7 (1984) 3, Seiten 162 bis 175 bekannt. Digitalsignal-Multiplexgeräte sind in der Zeitschrift "telcom report", 3 (1980) 4, Seiten 344 bis 352 beschrieben. Ersatzschaltungen, die einen Übergang von Betriebs- auf Ersatzstrecken ermöglichen, sind in der DE-PE 31 45 893 behandelt. Aspekte der Wartung und der Meßtechnik in Digital-Übertragungsnetzen sind der Zeitschrift "telcom report", 2 (1979) Beiheft Digital-Übertragungstechnik, Seiten 21 bis 24 zu entnehmen.

Aus der «Nachrichtentechnischen Zeitschrift», 30 (1977) 2, Seiten 141 bis 145 sind weiter Ersatzschaltungen bekannt.

In der deutschen Patentschrift 1 287 647 ist eine Schaltungsanordnung für eine Anzahl von über Zeitmultiplex- bzw. TASI-Nachrichtenkanäle verbundene Fernmeldeämter beschrieben, bei der jedes Amt Sende- und Empfangseinrichtungen für Signale zum Verbindungsaufbau aufweist, die in den Nachrichtenkanälen zugeordneten Signalblöcken über getrennte Signalkanäle übertragen werden. Identitätssignale in den Signalblöcken übernehmen neben der Kennzeichnung einer Verbindung im Aufbauzustand auch die Steuerung des Verbindungsaufbaus.

Der Pulsrahmen für ein 139264-kbit/s-Signal ist im CCITT Yellow Book, Volume III, Fascicle III.3, "Digital Networks - Transmission Systems and Multiplexing Equipment", Genf, 1981, Seite 147 dargestellt.

Für die entstehenden digitalen Übertragungsnetze ist die 140-Mbit/s-Ebene (exakt 139,264 Mbit/s) für Ersatzschaltungsmaßnahmen vorgesehen. Die Struktur eines solchen Übertragungsnetzes ist in der Regel stark vermascht, d.h. es beinhaltet eine große Zahl von Knotenpunkten. Eine Ersatzschaltung soll die zwischen den einzelnen Knoten geschalteten 140-Mbit/s-Digitalsignal-Abschnitte (DSA 140) über Koppelfelder führen und durch Störung ausgefallene Abschnitte über verfügbare Ersatzabschnitte schalten. Diese abschnittsbezogene Ersatzschaltung dient zur Erhaltung der Gesamtverfügbarkeit des Übertragungsnetzes. Benutzer können alle angeschlossenen 140-Mbit/s-Quellen und 140-Mbit/s-Senken sein, die als geschaltete 140-Mbit/s-Digitalsignal-Verbindungen (DSV 140) miteinander verbunden sind.

Aufgabe der Erfindung ist es, für diese und andere Multiplex-Hierarchiestufen ein Verfahren zu finden, daß eine quellenbezogene Überwachung sowohl innerhalb des Netzes, d.h. an jedem Koppelfeld, als auch außerhalb an der Senke sowie eine Steuerung des Verkehrs erlaubt.

Diese Aufgabe wird durch das Verfahren nach Anspruch 1 gelöst.

Vorteilhaft ist es auch, wenn ein nicht beschalteter Digitalsignal-Abschnitt mit jeweils einem Ersatz-signal aktiv gehalten wird und wenn die Ersatzsignale anstelle der Kennung jeweils eine Ersatzsignal-Kennung erhalten.

Für Digitalsignale mit Servicebits enthaltenden Pulsrahmen wird die Kennung oder Ersatzsignal-Kennung vorteilhafterweise in die Zeitschlitze eines oder mehrerer freier Servicebits kontinuierlich eingelesen. Für 139264-kbit/s-Digitalsignale wird die Kennung oder Ersatzsignal-Kennung in die Zeitschlitze der Bits Nr. 14 bis Nr. 16 im Block I kontinuierlich eingelesen.

Für ein asynchrones Einlesen wird vorteilhafterweise ein Kennungs-Rahmen gebildet, der ein Kennungsfeld, ein Sicherungsfeld und ein Ruhefeld enthält, dessen Bits den Zustand logisch "1" haben. Beispielsweise kann im Kennungs-Rahmen das Kennungsfeld 16 bit, das Sicherungsfeld 8 bit und das Ruhefeld 22 bit unfassen.

Vorteilhaft ist es, wenn die Kennungen oder Ersatzsignal-Kennungen der Digitalsignal-Verbindungen fortlaufend durchnumeriert werden und eine Richtungsangabe enthalten. Dasselbe gilt für Digitalsignal-Verbindungen eines Bezirks oder Ortes. Hier müssen noch Angaben über diese in die Kennung aufgenommen werden.

Vorteilhaft ist es schließlich, wenn die Kennung und/oder die Ersatzsignal-Kennung von einem zentralen Rechner verwaltet und an die betreffenden Quellen, Durchschalteeinrichtungen und/oder Senken mitgeteilt wird.

Anhand eines Ausführungsbeispiels wird die Erfindung nachstehend näher erläutert:

Figur 1 zeigt ein Übertragungsnetz, in dem das erfindungsgemäße Verfahren angewandt wird,

Figur 2 zeigt einen Pulsrahmen für ein 139264-kbit/s-Digitalsignal,

Figur 3 zeigt einen Kennungs-Rahmen dazu,

Figur 4 zeigt eine Digitalsignal-Verbindung und

Figur 5 zeigt eine Digitalsignal-Quelle/Senke-Einrichtung und eine Koppeleinrichtung für Gegenverkehr.

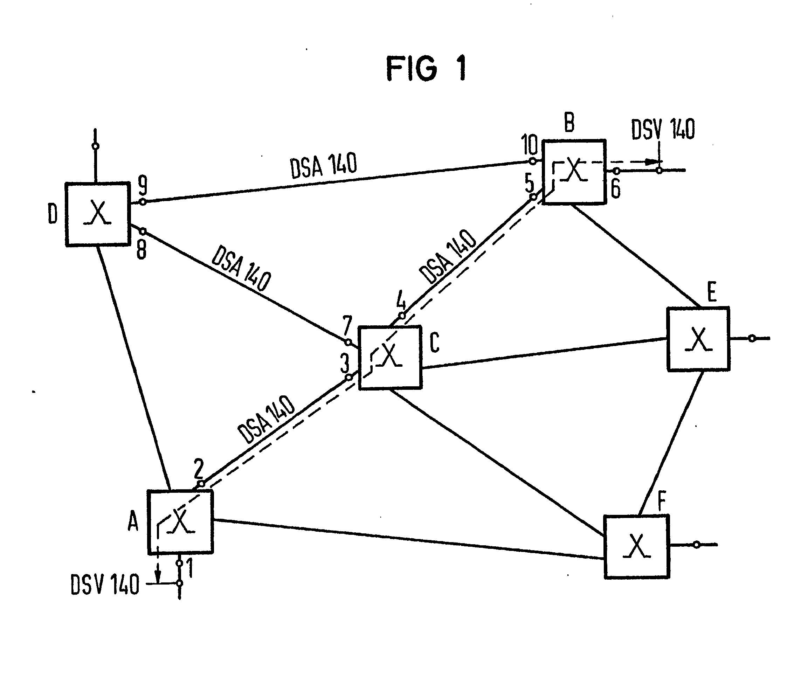

Figur 1 zeigt ein Übertragungsnetz in der 140-Mbit/s-Ebene mit Koppelfeldern A bis F, die durch Digitalsignal-Abschnitte DSA 140 miteinander verbunden sind. Bei diesen handelt es sich um Übertragungsstrecken, die an ihren Enden eine Bitrate von 140 Mbit/s erfordern, intern aber auch Abschnitte anderer Bitraten wie beispielsweise 565 Mbit/s haben können. Auch die Übertragungsmedien können unterschiedlich sein.

An den Koppelfeldern sind außen Anschlüsse 1 bis 10 eingezeichnet, die sich aber sich aber bei der praktischen Ausführung noch innerhalb des Koppelfeldes befinden.

Im Übertragungsnetz ist beispielsweise eine Digital-signal-Verbindung DSV 140 über die Anschlüsse 1 bis 6 geschaltet, so daß sie die Koppelfelder A, C und B durchläuft (gestrichelte Linie). Das in den Anschluß 1 eingespeiste Digitalsignal enthält eine Kennung, deren Vorhandensein an allen Anschlüssen 1 bis 6 überwacht werden kann.

In die Anschlüsse 7 bzw. 9 wird jeweils eine Ersatz-signal-Kennung eingespeist, die an den Anschlüssen 8 bzw. 10 empfangen und eliminiert werden kann. Wird beispielsweise der Digitalsignal-Abschnitt DSA 140 zwischen den Anschlüssen 4 und 5 gestört oder soll er freigeschaltet werden, dann kann die Digitalsignal-Verbindung über die Anschlüsse 7 bis 10 geschaltet werden, soweit die Ersatzsignal-Kennungen ergeben, daß die Ersatzstrecken frei sind.

Die Steuerinformationen für die Koppelfelder A-F werden von einem zentralen Rechner aus über ein Steuernetz zugeführt.

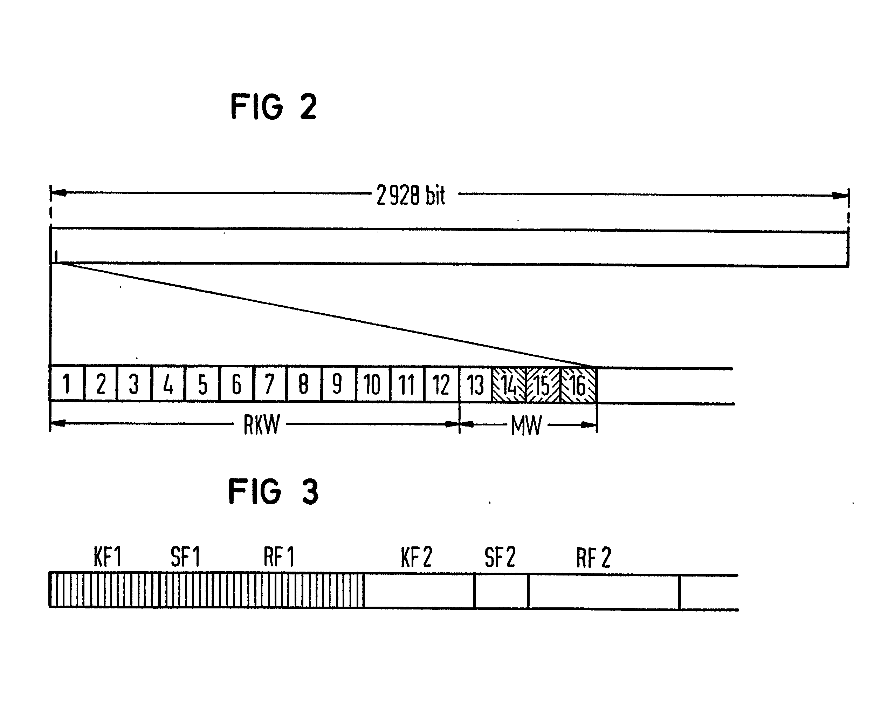

Die Einführung der Kennung oder der Ersatzsignal-Kennung nimmt auf den Rahmenaufbau des 140-Mbit/s-Signals bezug, der in Figur 2 gezeigt ist. Sie wird vorzugsweise in der 140-Mbit/s-Quelle, die Ersatzsignal-Kennung in der Durchschalteeinrichtung eingesetzt. Diese Ausführung ist aber nicht nur bei einem einheitlichen Rahmenaufbau aller 140-Mbit/s-Signale installierbar, sondern auch bei Quellen mit unterschiedlicher Rahmenstruktur. Hier müssen die Koppelfelder A-F durch steuerbare Zusatzgeräte für die Kennungs überwachung ergänzt werden oder es muß je Rahmenstruktur ein eigenes Ersatzschaltnetz aufgebaut werden.

Der gezeigte Rahmen nach der CCITT-Empfehlung G.751 enthält 2928 Bits. Die Bits Nr. 1 bis Nr. 12 sind mit dem Rahmenkennungswort RKW und die Bits Nr. 13 bis Nr. 16 sind mit dem Meldewort MW belegt. Die Bits Nr. 14 bis Nr. 16 sind Servicebits, von denen eines zur Einspeisung des Kennungssignals nach Figur 3 ausgewählt werden kann. Die Aufteilung der restlichen 2912 bit kann beliebig sein.

Jedes Servicebit hat für synchrone Daten ein Übertragunskapazität von 47560 bit/s. Unter synchronen Daten werden Daten mit einer Übertragungsgeschwindigkeit von

$$\underline{\frac{139264 \ kbit/s}{2928 \ bit}}$$

verstanden. Bei asynchroner Datenübertragung über ein Servicebit reduziert sich die zulässige Übertragungsbitrate nach den Anforderungen der zulässigen Zeichenverzerrung.

Das Kennungssignal besteht aus einem Kennungsfeld KF1 mit 16 bit, einem Sicherungsfeld SF1 mit 8 bit und einem Feld RF1 mit 22 bit. Die Felder des nachfolgenden Rahmens sind anstelle mit einer 1 mit einer 2 gekennzeichnet. In das Kennzeichenfeld KF1, KF2, ... wird die Kennung eingeschrieben, das Sicherungsfeld SF1, SF2, ... enthält ein aus der Kennung abgeleitetes Codewort, das empfangsseitig nach einer Umsetzung mit der Kennung verglichen wird, wobei Verfälschungen der Kennung zutage treten. Das Ruhefeld RF1, RF2, ..., dessen Bits alle den logischen Zustand "1" haben, ermöglicht bei asynchronem Betrieb ein sicheres Erkennen des nachfolgenden Rahmens.

Der Inhalt der Kennung ist eine fortlaufende Numerierung aller DSV 140-Quellen eines Übertragungsnetzes mit Richtungsangabe oder eine fortlaufende Numerierung aller DSV 140 Quellen eines bestimmten Bezirkes oder eines Ortes mit Angabe des Bezirkes, des Ortes und der Richtung.

Eine kontinuierliche Aussendung der Kennung von der Quelle DSV 140 hat folgende Vorteile:
- Sie ermöglicht eine lückenlose Überwachung der jeweiligen DSV 140-Kennung an allen Koppelfeldern und an der Senke, sowie eine Dauerüberwachung der durchgeschalteten Digitalsignal-Verbindung,
- für eine Koppelfeldüberwachung ist keine zusätzliche Adressierung erforderlich,
- kein Verschalten von verschiedenen Digitalsignal-Abschnitten im Sinne des Datenschutzes möglich,
- es erfolgt eine eindeutige Fehlerlokalisierung,
- es besteht die Möglichkeit der Qualitätsüberwachung durch Aufsummierung der einzelnen Bitfehlerquoten.

Für das automatische Rangieren von Digitalsignal-Verbindungen DSV 140 oder einzelner Digitalsignal-Abschnitte DSA 140 sind die genannten Vorteile von besonderer Bedeutung.

Mit der Ersatzsignal-Kennung ist die Feststellung der Betriebsbereitschaft von Ersatzkanälen und die Überprüfung eines kompletten Ersatzweges möglich.

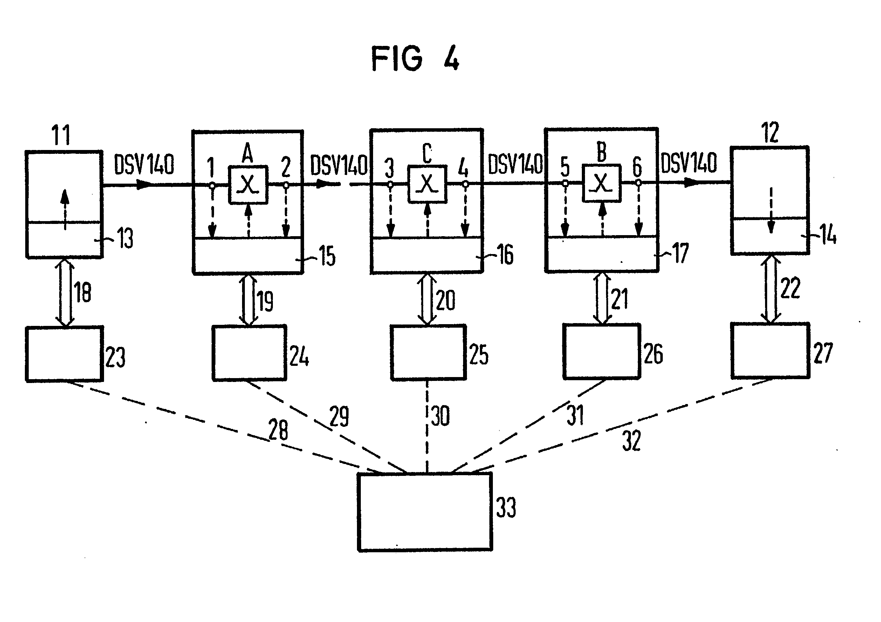

Figur 4 zeigt die Digitalsignal-Verbindung DSV 140, die in Figur 1 gestrichelt dargestellt ist, detaillierter. Sie enthält eine Digitalsignalquelle 11, die Koppelfelder A - C und eine Digitalsignalsenke 12. Eine Datenverarbeitungszentrale 33 ist über Steuerbefehlleitungen 28 - 32 mit Steuereinrichtungen 23 - 27 verbunden. Die Steuereinrichtung 23 ist über einen Bus 18 mit einer Adresseneingabe 13 der Digitalsignalquelle 11 verbunden, die Steuereinrichtungen 24 - 26 sind über Busse 19 - 21 mit Adressenspeichern 15 - 17 verbunden, die den Koppelfeldern A - C zugeordnet sind, die Steuereinrichtung 27 ist schließlich über einen Bus 22 mit einer Adressenausgabe 14 der Digitalsignalsenke 12 verbunden.

Die Datenverarbeitungszentrale 33 kann an die Steuereinrichtungen 24 - 26 jeweils einen Steuerbefehl abgeben, der die Adresse des Koppelfeldes A, B oder C, die Adresse der Digitalsignalverbindung DSV 140 und die entsprechenden Verbindungen 1-2 im Koppelfeld A, 3-4 im Koppelfeld C oder 5-6 im Koppelfeld B beinhaltet. Den Steuereinrichtungen 23 und 27 wird die Adresse der Digitalsignalverbindung DSV 140 übermittelt.

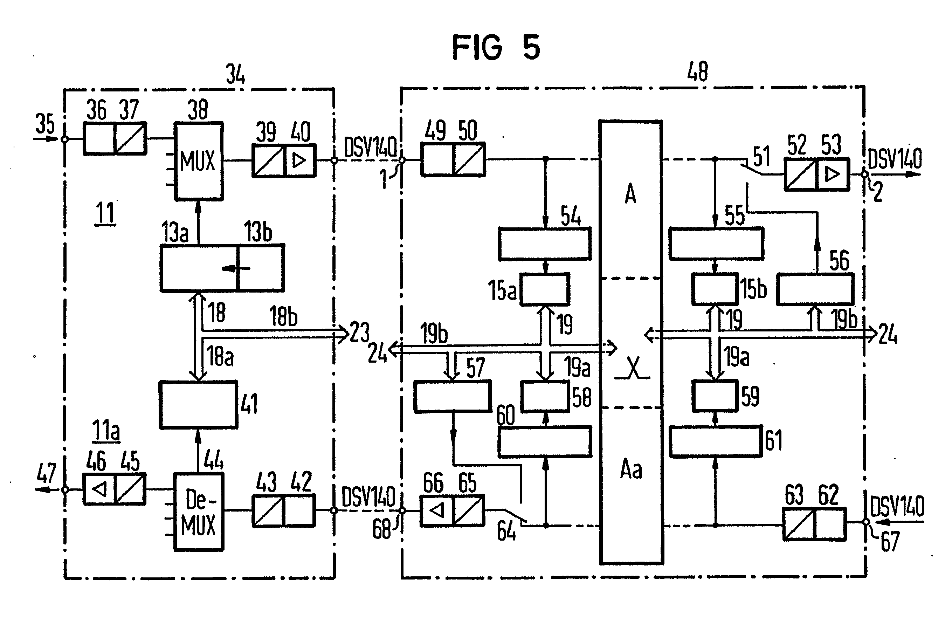

Figur 5 zeigt eine Digitalsignal-Quelle/Senke-Einrichtung 34 und eine Koppelfeldeinrichtung 48. Diese Anlage ist für Gegenverkehr eingerichtet. Neben der Digitalsignalquelle 11 und dem Koppelfeld A in der oberen Hälfte sind in der unteren Hälfte ein Koppelfeld Aa und eine Digitalsignalsenke 11a angeordnet. Diese wirken so wie das Koppelfeld B und die Digitalsignalsenke 12.

Die Digitalsignal-Quelle/Senke-Einrichtung 34 enthält in der Digitalsignalquelle 11 einen Eingang 35, einen Regenerator 36, einen Schnittstellencode-Decodierer 37, einen Multiplexer 38, einen Schnittstellencode-Codierer 39, einen Verstärker 40, einen Quellenkennungssender 13a und eine Quellenkennungseinstellung 13b. Die Digitalsignalsenke 11a enthält einen Quellenkennungsempfänger 41, einen Regenerator 42, einen Schnittstellencode-Decodierer 43, einen Demultiplexer 42, einen Schnittstellencode-Codierer 45, einen Verstärker 46 und einen Ausgang 47. Quellenkennungssender 13a und Quellenkennungsempfänger 41 sind untereinander und mit der Steuereinrichtung 23 über Busse 18, 18a und 18b verbunden.

Die Koppeleinrichtung 48 enthält im Bereich der Übertragung vom Eingang 1 zum Ausgang 2 einen Regenerator 49, einen Schnittstellencode-Decodierer 50, das Koppelfeld A, einen Umschalter 51, einen Schnittstellencode-Codierer 52, einen Verstärker 53, Rahmenerkennungseinrichtungen 54 und 55, Quellenkennungsempfänger 15a und 15b im Adressenspeicher 15 sowie einen Ersatzwegkennungssender 56. Im Bereich zwischen einem Eingang 67 und einem Ausgang 68 enthält die Koppeleinrichtung 48 einen Ersatzwegkennungssender 57, Quellenkennungsempfänger 58 und 59, Rahmenerkennungseinrichtung 60 und 61, einen Regenerator 62, einen Schnittstellencode-Decodierer 63, ein Koppelfeld Aa, einen Umschalter 64, einen Schnittstellencode-Codierer 65 und einen Verstärker 66.

Trifft am Eingang 35 ein 34-Mbit/s-Signal ein, so wird dieses im Regenerator 36 regeneriert und im Schnittstellencode-Decodierer 37 in ein Binärsignal umgesetzt, das im Multiplexer 38 mit drei weiteren entsprechend behandelten 34-Mbit/s-Signalen gebündelt wird. Die in der Quellenkennungseinstellung 13b ausgewählte Quellenkennung wird über den Quellenkennungssender 13a ebenfalls dem Multiplexer 38 zugeführt, der sie in die genormten Servicebits Yl und Y2 einfügt. Das Multiplexsignal wird im Schnittstellencode-Codierer 39 in den Schnittstellencode umgesetzt und anschließend im Verstärker 40 auf den genormten Ausgangspegel angehoben.

Über die Digitalsignalverbindung DSV 140 gelangt das 140-Mbit/s-Signal zum Eingang 1 der Koppeleinrichtung 48. Dort wird es im Regenerator 49 regeneriert und im Schnittstellencode-Decodierer 50 in ein Binärsignal umgesetzt. Bei einer angenommenen Durchschaltung im Koppelfeld A vom Eingang 1 in Richtung zum Ausgang 2 läuft das 140-Mbit/s-Signal anschließend weiter über den Umschalter 51, den Schnittstellencode-Codierer 52 und den Verstärker 53 zum Ausgang 2. Am Eingang des Koppelfeldes A wird das 140-Mbit/s -Signal weiter der Rahmenerkennungseinrichtung 54 und dem Quellenkennungsempfänger 15a zugeführt. Erkennt dieser die ihm von der Datenverarbeitungszentrale 33 mitgeteilte Quellenkennung, dann bestätigt er den Empfang über die Busse 19 und 19b der Steuereinrichtung 24 und der Datenverarbeitungsanlage 33. Am Ausgang des Koppelfeldes A läuft derselbe Vorgang über die Rahmenerkennungseinrichtung 55, den Quellenkennungsempfänger 15b und die Busse 19 und 19b ab. Durch Vergleich der beiden Quellenkennungen in der Steuereinrichtung 24 erhält man die Eigenüberwachung des Koppelfeldes A.

In der Gegenrichtung spielt sich zwischen dem Eingang 67 und dem Ausgang 68 in der Koppeleinrichtung 48 dasselbe ab. In der Digitalsignalsenke 11a wird das 140-Mbits/s-Signal dem Regenerator 42, dem Schnittstellencode-Decodierer 43 und dem Demultiplexer 44 zugeführt. Über die Servicebits Y1 und Y2 wird dem Quellenkennungserkenner 41 die Quellenkennung mitgeteilt, die dieser wiederum über die Busse 18a und 18b der Steuereinrichtung 23 und der Datenverarbeitungszentrale 33 mitteilt. Der Demultiplexer 44 trennt die im 140-Mbit/s-Signal enthaltene vier 34-Mbit/s-Signale. Eines wird in der Figur über den Schnittstellencode-Codierer 45 und den Verstärker 46 dem Ausgang 47 zugeführt.

Soll in einem Digitalsignal-Abschnitt DSA 140, der sich alternativ an den Ausgang 2 oder 68 anschließt, eine Ersatzwegkennung eingespeist werden, dann wird der Umschalter 51 bzw. 64 umgelegt. Die Steuerung der Ersatzwegkennungs-Sender 56 und 57 erfolgt von der Datenverarbeitungszentrale 23 über die Steuereinrichtung 24 und den Bus 19b.

## Patentansprüche

1. Verfahren zur Überwachung und Steuerung des Verkehrs in digitalen Übertragungsnetzen mit Durchschalteeinrichtungen einer Multiplex-Hierarchiestufe, dadurch gekennzeichnet, daß am Anfang jeder Digitalsignal-Verbindung (DSV 140) in die Pulsrahmen der zu übertragenden Digitalsignale jeweils eine Kennung eingesetzt wird, daß die Kennungen Informationen über die Verkehrsbeziehungen der einzelnen Digitalsignal-Verbindungen (DSV 140) enthalten, daß die jeweilige Kennung an den Durchschalteeinrichtungen und/oder an Senken der Multiplex-Hierarchiestufe überwacht wird, daß die Kennung der gewünschten Digitalsignal-Verbindung (DSV 140) den betroffenen Durchschalteeinrichtungen (A–F) von einem zentralen Rechner über ein Steuernetz mitgeteilt wird, daß die Durchschalteeinrichtungen (A–F) entsprechend gesteuert werden und daß die Überwachung durch den zentralen Rechner über das Steuernetz erfolgt.

2. Verfahren nach Anspruch 1, dadurch gekennzeichnet, daß ein nicht beschalteter Digitalsignal-Abschnitt (DSA 140) mit jeweils einem Ersatzsignal aktiv gehalten wird und daß die Ersatzsignale anstelle der Kennung jeweils eine Ersatzsignal-Kennung erhalten.

3. Verfahren nach Anspruch 1 oder 2 für Digitalsignale mit Servicebits enthaltenden Pulsrahmen, dadurch gekennzeichnet, daß die Kennung oder Ersatz-Kennung in die Zeitschlitze eines oder mehrer freier Servicebits kontinuierlich eingelesen wird.

4. Verfahren nach Anspruch 1 oder 2 für 139264-kbit/s-Digitalsignale mit einem Pulsrahmen nach der CCITT-Empfehlung G.751, dadurch gekennzeichnet, daß die Kennung oder Ersatzsignal-Kennung in die Zeitschlitze der Bits Nr. 14 - Nr. 16 in Block I kontinuierlich eingelesen wird.

5. Verfahren nach Anspruch 3 oder 4, dadurch gekennzeichnet, daß für das asynchrone Einlesen ein Kennungs-Rahmen gebildet wird, der ein Kennungsfeld, ein Sicherungsfeld und ein Ruhefeld enthält, dessen Bits den Zustand logisch "1" haben.

6. Verfahren nach Anspruch 5, dadurch gekennzeichnet, daß ein Kennungs-Rahmen das Kennungsfeld (KF1, KF2) 16 bit, das Sicherungsfeld (SF1, SF2) 8 bit und das Ruhefeld (RF1, RF2) 22 bit umfaßt.

7. Verfahren nach einem der Ansprüche 1 bis 6, dadurch gekennzeichnet, daß die Kennungen oder Ersatzsignal-Kennungen der Digitalsignal-Verbindungen fortlaufend durchnumeriert werden und eine Richtungsangabe enthalten.

8. Verfahren nach einem der Ansprüche 1 bis 6, dadurch gekennzeichnet, daß die Kennung oder Ersatzsignal-Kennung der Digitalsignal-Verbindungen (DSV 140) eines Bezirks oder Ortes in einem Übertragungsnetz fortlaufend durchnumeriert werden und eine Angabe des Bezirks oder Ortes und eine Richtungsangabe enthalten.

9. Verfahren nach einem der vorhergehenden Ansprüche, dadurch gekennzeichnet, daß die Kennung und/oder die Ersatzsignal-Kennung von einem zentralen Rechner verwaltet und an die betreffenden Quellen, Durchschalteeinrichtungen (A–F) und/oder Senken mitgeteilt wird.

## Claims

1. Method for monitoring and controlling the traffic in digital transmission networks with circuit switching devices of a multiplex hierarchy stage, characterized in that an identifier is inserted in each case into the pulse frames of the digital signals to be transmitted at the beginning of every digital signal connection (DSV 140), in that the identifiers contain information concerning the traffic relationships of the individual digital signal connections (DSV 140), in that the respective identifier is monitored at the circuit switching devices and/or at sinks of the multiplex hierarchy stage, in that the identifier of the desired digital signal connection (DSV 140) is communicated to the respective circuit switching devices (A–F) by a central computer via a control network, in that the circuit switching devices (A–F) are correspondingly controlled, and in that the monitoring is carried out by the central computer via the control network.

2. Method according to claim 1, characterized in that an idle digital signal section (DSA 140) is kept active with in each case one alternate signal, and in that the alternate signals in each case contain an alternate signal identifier instead of the identifier.

3. Method according to claim 1 or 2 for digital signals with pulse frames containing service bits, characterized in that the identifier or alternate identifier is continuously read into the time slots of one or more free service bits.

4. Method according to claim 1 or 2 for 139,264-kbit/s digital signals with a pulse frame in accordance with CCITT Recommendation G.751, characterized in that the identifier or alternate signal identifier is continuously read into the time slots of bits No. 14–No. 16 in block I.

5. Method according to claim 3 or 4, characterized in that, for the asynchronous reading in, an identification frame is formed which contains an identification field, a security field and an idle field, whose bits have the logical "1" state.

6. Method according to claim 5, characterized in that an identification frame comprises the identification field (KF1, KF2) 16 bits, the security field (SF1, SF2) 8 bits and the idle field (RF1, RF2) 22 bits.

7. Method according to one of claims 1 to 6, characterized in that the identifiers or alternate signal identifiers of the digital signal connections are continuously consecutively numbered and contain a direction indication.

8. Method according to one of claims 1 to 6, characterized in that the identifier or alternate signal identifier of the digital signal connections (DSV 140) of an area or locality are continuously consecutively numbered in a transmission network and contain a specification of the area or locality and a direction indication.

9. Method according to one of the preceding claims, characterized in that the identifier and/or the alternate signal identifier is managed by a central computer and is communicated to the respective sources, circuit switching devices (A–F) and/or sinks.

## Revendications

1. Procédé pour contrôler et commander le trafic dans des réseaux numériques de transmission comportant des dispositifs d'interconnexion d'un étage hiérarchique de multiplexage, caractérisé par le fait qu'au début de chaque liaison (DSV 140) de transmission de signaux numériques, respectivement un indicatif est inséré dans la trame d'impulsions des signaux numériques devant être transmis, que les indicatifs contiennent des informations concernant des relations de trafic des différentes liaisons (DSV 140) de transmission de signaux numériques, que l'indicatif respectif est contrôlé dans les dispositifs d'interconnexion et/ou dans des collecteurs de l'étage hiérarchique de multiplexage, que l'indicatif de la liaison désirée (DSV 140) de transmission de signaux numériques est communiquée aux dispositifs concernés d'interconnexion (A–F) par un calculateur central par l'intermédiaire d'un réseau de commande, que les dispositifs d'interconnexion (A–F) sont commandés de façon correspondante, et que le contrôle est réalisé par le calculateur central par l'intermédiaire du réseau de commande.

2. Procédé suivant la revendication 1 caractérisé par le fait qu'une section non câblée (DSA 140) de transmission de signaux numériques est maintenue active au moyen d'un signal de remplacement respectif, et que les signaux de remplacement reçoivent, à la place de l'indicatif, respectivement un indicatif de signal de remplacement.

3. Procédé suivant la revendication 1 ou 2 pour des signaux numériques comportant des trames d'impulsions contenant des bits de service, caractérisé par le fait que l'indicatif ou l'indicatif de remplacement est inséré continûment dans les créneaux temporels d'un ou de plusieurs bits de service libres.

4. Procédé suivant la revendication 1 ou 2 pour des signaux numériques à 139 264 kbits/s, possédant une trame d'impulsions conformément à la recommandation CCITT G.751, caractérisé par le fait que l'indicatif ou l'indicatif du signal de remplacement est inséré continûment dans les créneaux temporels des bits N°14–N°16 dans le bloc I.

5. Procédé suivant la revendication 3 ou 4, caractérisé par le fait que pour la lecture asynchrone, une trame d'indicatif est formée, qui contient une zone pour l'indicatif, une zone de sécurité et une zone de repos, dont les bits possèdent l'état logique «1».

6. Procédé suivant la revendication 5, caractérisé par le fait qu'une trame d'indicatif contient la zone d'indicatif (KF1, KF2) comportant 16 bits, la zone de sécurité (SF1, SF2) comportant 8 bits et la zone de repos (RF1, RF2) comportant 22 bits.

7. Procédé suivant l'une des revendications 1 à 6, caractérisé par le fait que les indicatifs ou les indicatifs de signaux de remplacement des liaisons de transmission de signaux numériques sont numérotés avec une numérotation continue et contiennent une indication de direction.

8. Procédé suivant l'une des revendications 1 à 6, caractérisé par le fait que l'indicatif ou l'indicatif du signal de remplacement des liaisons (DSV 140) de transmission de signaux numériques d'un secteur ou d'une localité dans un réseau de transmission sont numérotés d'une manière continue et contiennent une indication du secteur ou de la localité et une indication de direction.

9. Procédé selon l'une des revendications précédentes, caractérisé par le fait que l'indicatif et/ou l'indicatif du signal de remplacement est géré par un calculateur central et est communiqué aux sources, aux dispositifs d'interconnexion (A–F) et/ou aux collecteurs, concernés.

# FIG 1

EP 0 214 398 B1

## FIG 2

2928 bit

| 1 | 2 | 3 | 4 | 5 | 6 | 7 | 8 | 9 | 10 | 11 | 12 | 13 | 14 | 15 | 16 |

RKW — MW

## FIG 3

KF1   SF1   RF1        KF2   SF2   RF2

EP 0 214 398 B1

## FIG 4

EP 0 214 398 B1

# FIG 5

EP 0 214 398 B1